# EUROPÄISCHE PATENTSCHRIFT

(11) **EP 2 348 453 B1**
(45) Veröffentlichungstag und Bekanntmachung des Hinweises auf die Patenterteilung: **28.11.2018**
(21) Anmeldenummer: 11000549.3
(22) Anmeldetag: 24.01.2011
(51) Int. Cl.: G06F 21/57, G06F 21/73, G06F 21/77

(54) **VERFAHREN ZUM ZUORDNEN EINES TRAGBAREN DATENTRÄGERS, INSBESONDERE EINER CHIPKARTE, ZU EINEM TERMINAL**
METHOD FOR ALLOCATING A PORTABLE DATA MEDIUM, IN PARTICULAR A CHIP CARD, TO A TERMINAL
PROCÉDÉ D'ATTRIBUTION D'UN SUPPORT DE DONNÉES PORTATIF, NOTAMMENT UNE CARTE À PUCE, À UN TERMINAL

(30) Priorität: 26.01.2010 DE 102010005726
(43) Veröffentlichungstag der Anmeldung: 27.07.2011
(73) Patentinhaber: Giesecke+Devrient Mobile Security GmbH, 81677 München (DE)
(72) Erfinder: Baldischweiler, Michael, 81825 München (DE)

(56) Entgegenhaltungen:
- EP-A2- 1 369 764
- US-A1- 2007 101 156
- Michael Groß: "Vertrauenswürdiges Booten als Grundlage authentischer Basissysteme", VIS '91 Verläßliche Informationssysteme, GI-Fachtagung, 1. Januar 1991 (1991-01-01), Seiten 190-207, XP55039363, ISBN: 3540539115 Gefunden im Internet: URL:http://os.inf.tu-dresden.de/papers_ps/ vis91.pdf [gefunden am 2012-09-27]

## Beschreibung

Die Erfindung betrifft ein Verfahren zum Zuordnen eines tragbaren Datenträgers, insbesondere einer Chipkarte, zu einem Terminal sowie ein System aus Terminal und tragbarem Datenträger.

Aus dem Stand der Technik ist es bekannt, einen tragbaren Datenträger an einen Terminal zu binden, in dem der tragbare Datenträger verwendet wird. Dieser, auch unter dem Begriff des Pairings bzw. der Paarbildung bekannte Vorgang kann auf verschiedene Weise ablaufen. Beispielsweise kann ein nur dem Terminal und dem tragbaren Datenträger bekanntes Passwort, z.B. basierend auf Zufallszahlen und eindeutigen Identifikationen des Terminals und des tragbaren Datenträgers, ausgehandelt werden. Basierend auf diesem Passwort, welches z.B. durch einen Hashwert repräsentiert sein kann, wird dann im Rahmen einer Authentisierung überprüft, ob das Terminal und der tragbare Datenträger einander zugeordnet sind.

Aus dem Dokument US 7,437,181 B2 ist ein Verfahren zum Binden einer Identifikationskarte in der Form einer SIM-Karte an einen Terminal in der Form eines Mobiltelefons beschrieben. Das Binden der SIM-Karte an das Mobiltelefon erfolgt unter Verwendung eines gemeinsamen Authentisierungsschlüssels. Dabei besteht gegebenenfalls die Möglichkeit, dass bei der Authentisierung die SIM-Karte dynamisch einen Authentisierungsschlüssel aus einer Mehrzahl von Schlüsseln auswählt. Dem Mobiltelefon, welches die gleichen Authentisierungsschlüssel enthält, wird in diesem Fall mitgeteilt, welcher Schlüssel zur Authentisierung eingesetzt wird. Bei der Durchführung der Authentisierung wird auf Seiten des Mobiltelefons und auf Seiten der SIM-Karte mit dem gleichen Algorithmus aus der gleichen Zufallszahl und dem gleichen Authentisierungsschlüssel ein Ergebnis berechnet. Die Authentisierung ist erfolgreich, wenn die Ergebnisse in der SIM-Karte und in dem Mobilfunkgerät übereinstimmen.

US 2007/0101156 A1 sichert das Booten eines PC mittels eines TPM-Modul ab, das an den PC gebunden wird. Eine vorhandene Bindung wird geprüft durch ein gemeinsames, vom TPM erzeugtes Geheimnis und/oder einen für die PC-Konfiguration vom PC gemessenen Wert. Das Dokument kann als nächstliegender Stand der Technik betrachtet werden.

Der Artikel "Vertrauenswürdiges Booten als Grundlage authentischer Betriebssysteme", Michael Groß, VIS '91 Verläßliche Informationssysteme, GI-Fachtagung, 1.1.1991, S. 190 bis 207, ISBN: 3540539115, XP55039363, schlägt die Verwendung kryptographischer Schlüssel und Zertifikate in den Knoten eines verteilten Rechnernetzes vor, um das Booten des Knoten mit einem vertrauenswürdigen Betriebssystem zu erreichen.

Ebenfalls für einen Boot-Vorgang eines PCs schlägt EP 1369 764 A2 (D3) vor, zunächst den Hashwert eines Ladecodes und danach den Hashwert des gesamten Codes zu verifizieren, jeweils bevor der entsprechende Code ausgeführt wird.

Im Rahmen des Vorgangs des Zuordnens bzw. Bindens eines tragbaren Datenträgers an einen Terminal wird bei den aus dem Stand der Technik bekannten Verfahren davon ausgegangen, dass das Terminal vertrauenswürdig ist. Es erfolgt somit im Rahmen des Zuordnens keine Überprüfung von (gegebenenfalls manipulierten) Eigenschaften des Terminals.

Aufgabe der Erfindung ist es deshalb, ein Verfahren zum Zuordnen eines tragbaren Datenträgers zu einem Terminal zu schaffen, bei dem im Rahmen der Zuordnung auch Eigenschaften des Terminals verifiziert werden.

Diese Aufgabe wird durch das Verfahren gemäß Patentanspruch 1 bzw. das System gemäß Patentanspruch 10 gelöst. Weiterbildungen der Erfindung sind in den abhängigen Ansprüchen definiert.

In dem erfindungsgemäßen Verfahren wird ein tragbarer Datenträger zu einem Terminal zugeordnet, wobei der tragbare Datenträger insbesondere eine Chipkarte beliebiger Form, wie z.B. eine Smartcard, darstellen kann. Bei dem Terminal handelt es sich um ein beliebiges Gerät, welches im Betrieb mit dem tragbaren Datenträger interagiert, beispielsweise in der Form eines Mobilfunkgeräts. In einer besonders bevorzugten Ausführungsform stellt das Terminal eine sog. Control-Cash-Unit dar, welche dazu dient, Buchungssätze von Registrierkassen in einem Flash-Speicher des Terminals verschlüsselt abzulegen. In diesem Fall stellt der tragbare Datenträger, der im Betrieb der Cash-Control-Unit fest darin verbaut ist, ein Sicherheitselement dieses Geräts dar.

In dem erfindungsgemäßen Verfahren wird basierend auf einer Kommunikation zwischen tragbarem Datenträger und Terminal in einem Schritt b) verifiziert, ob ein dem Terminal zugeordnetes erstes Passwort, das aus einer im Terminal hinterlegten Software (d.h. aus dem gespeicherten Softwarecode) abgeleitet ist bzw. im Rahmen des Verfahrens abgeleitet wird, mit einem entsprechenden, dem tragbaren Datenträger zugeordneten ersten Passwort übereinstimmt. Die im Terminal hinterlegte Software ist dabei insbesondere eine in dem Terminal eingebettete Software in der Form einer Firmware, wobei die Firmware vorzugsweise in einem Flash-Speicher des Terminals hinterlegt ist.

Die Verifikation in Schritt b) läuft derart ab, dass das dem Terminal zugeordnete erste Passwort dem tragbaren Datenträger übermittelt wird, der anschließend verifiziert, ob das dem Terminal zugeordnete erste Passwort mit dem entsprechenden, dem tragbaren Datenträger zugeordneten und auf diesem gespeicherten ersten Passwort übereinstimmt. Die Verifikation wird gemäß dieser Variante somit in dem tragbaren Datenträger durchgeführt.

Im Falle einer erfolgreichen Verifikation in Schritt b), d.h. falls eine Übereinstimmung zwischen den dem Terminal und dem tragbaren Datenträger zugeordneten ersten Passwörtern festgestellt worden ist, wird in einem Schritt c) des erfindungsgemäßen Verfahrens ein zweites, individuell für das Terminal und den tragbaren Datenträger gültiges Passwort dem Terminal und dem tragbaren Datenträger zugeordnet. Der Begriff "individuell" bedeutet dabei, dass das zweite Passwort individuell zwischen dem Terminal und dem tragbaren Datenträger ausgehandelt wird. Insbesondere werden hierzu eindeutige, nur dem einzelnen Datenträger und/oder Terminal zugewiesene Informationen verwendet.

Der Schritt c), gemäß dem das zweite Passwort generiert wird, ist derart ausgestaltet, dass der tragbare Datenträger eine ihm zugeordnete und vorzugsweise eindeutige Identifikation, insbesondere in der Form einer eindeutigen Seriennummer des tragbaren Datenträgers, an das Terminal übermittelt, wobei das Terminal aus der Identifikation des tragbaren Datenträgers und der im Terminal hinterlegten Software das zweite Passwort ableitet und anschließend an den tragbaren Datenträger übermittelt. Somit wird eine Information des tragbaren Datenträgers in der Form seiner Identifikation auf dem Terminal hinterlegt, so dass zu einem späteren Zeitpunkt mit Hilfe dieser Identifikation bei einer Authentisierung zwischen Terminal und Datenträger das zweite Passwort rekonstruiert werden kann.

Das erfindungsgemäße Verfahren zeichnet sich dadurch aus, dass zunächst die im Terminal hinterlegte Software mit einem initialen ersten Passwort verifiziert wird, bevor anschließend eine individuelle Zuordnung zwischen Terminal und tragbarem Datenträger basierend auf einem individuellen zweiten Passwort erfolgt. Auf diese Weise werden Manipulationen der Terminal-Software bzw. nicht zur Verwendung mit dem tragbaren Datenträger vorgesehene Versionen der Terminal-Software zuverlässig erkannt.

Um das erste Passwort in geeigneter Weise eindeutig der Software auf dem Terminal zuzuordnen, ist bzw. wird in einer besonders bevorzugten Variante des erfindungsgemäßen Verfahrens das erste Passwort durch Bilden eines Hashwerts mit einer ersten Hash-Funktion über die im Terminal hinterlegte Software abgeleitet. Die erste Hash-Funktion kann dabei eine aus dem Stand der Technik bekannte Hash-Funktion sein. Die Verwendung eines Hashwerts als Passwort weist dabei den Vorteil auf, dass aus dem Passwort nicht rückgeschlossen werden kann, aus welchen Daten das Passwort generiert wurde.

In einer besonders bevorzugten Variante der soeben beschriebenen Ausführungsform der Erfindung wird das zweite Passwort durch Bilden eines Hashwerts mit einer zweiten Hash-Funktion über die im Terminal hinterlegte Software und die Identifikation des tragbaren Datenträgers gebildet. Dies erfolgt z.B. derart, dass in der Software die Identifikation hinterlegt wird und anschließend über die Software mit der darin enthaltenen Identifikation der Hashwert gebildet wird. Die zweite Hash-Funktion kann wiederum eine beliebige, aus dem Stand der Technik bekannte Hash-Funktion sein, welche auch mit der ersten Hash-Funktion übereinstimmen kann. Durch die Verwendung der Hash-Funktion wird wiederum der Vorteil erreicht, dass aus dem zweiten Passwort nicht auf die im Terminal verwendete Software bzw. die Identifikation rückgeschlossen werden kann.

In einer besonders bevorzugten Ausführungsform des erfindungsgemäßen Verfahrens wird die Zuordnung gemäß den Schritten a) und c) in einer gesicherten Umgebung durchgeführt, insbesondere im Rahmen der Produktion des Terminals mit darin integriertem tragbaren Datenträger. Auf diese Weise kann schon während der Produktion evaluiert werden, ob im Vorfeld Manipulationen an der Software des Terminals vorgenommen wurden.

In einer weiteren Variante des erfindungsgemäßen Verfahrens schließt sich an den Schritt c) des Verfahrens die Inbetriebnahme des Terminals und des Datenträgers im Rahmen eines geeigneten Authentisierungsprozesses basierend auf dem zweiten Passwort an. Dabei wird im Rahmen der Inbetriebnahme in einem ersten Verifikationsschritt, der gegebenenfalls Unterschritte umfassen kann, verifiziert, ob das dem Terminal zugeordnete zweite Passwort mit dem dem tragbaren Datenträger zugeordneten zweiten Passwort übereinstimmt, wobei die Inbetriebnahme ausschließlich bei erfolgreichem ersten Verifikationsschritt, d.h. wenn die zugeordneten zweiten Passwörter übereinstimmen, fortgesetzt wird. Der erste Verifikationsschritt kann gegebenenfalls der einzige Verifikationsschritt während der Authentisierung sein. In diesem Fall wird nach erfolgreichem ersten Verifikationsschritt der bestimmungsgemäße Betrieb des Terminals zusammen mit dem tragbaren Datenträger aufgenommen.

In einer bevorzugten Variante der Erfindung wird der erste Verifikationsschritt derart durchgeführt, dass das Terminal aus der bei ihm hinterlegten Software sowie der zuvor im Rahmen der Zuordnung an das Terminal übermittelten und dort gespeicherte Identifikation des tragbaren Datenträgers das zweite Passwort ermittelt, beispielsweise durch das oben beschriebene Bilden eines Hashwerts mit einer zweiten Hash-Funktion über die Software und die Identifikation. Das im Terminal ermittelte zweite Passwort wird anschließend an den tragbaren Datenträger übermittelt, in dem das dem Datenträger zugeordnete zweite Passwort gespeichert ist. Der tragbare Datenträger stellt dann fest, ob die beiden Passwörter miteinander übereinstimmen.

Gegebenenfalls kann sich im Rahmen der Inbetriebnahme des Terminals und des tragbaren Datenträgers an den ersten Verifikationsschritt ein zweiter Verifikationsschritt anschließen, der nur dann durchgeführt wird, wenn der erste Verifikationsschritt erfolgreich war. In diesem zweiten Verifikationsschritt, der gegebenenfalls mehrere Unterschritte umfassen kann, wird verifiziert, ob ein drittes, bei jeder Inbetriebnahme von Terminal und Datenträger veränderbares Passwort, das in dem tragbaren Datenträger hinterlegt ist, mit einem entsprechenden, dem Terminal zugeordneten dritten Passwort übereinstimmt, wobei die Inbetriebnahme ausschließlich bei erfolgreichem zweiten Verifikationsschritt fortgesetzt wird. Insbesondere wird nach erfolgreichem zweiten Verifikationsschritt der bestimmungsgemäße Betrieb von Terminal und tragbarem Datenträger aufgenommen.

In einer besonders bevorzugten Ausführungsform läuft der zweite Verifikationsschritt derart ab, dass zunächst das dritte Passwort aus einer in dem tragbaren Datenträger hinterlegten Tabelle umfassend mehrere dritte Passwörter entnommen wird, wobei in der Tabelle jedem dritten Passwort eine Speicherbereichs-Identifikation zugeordnet ist, welche einen Speicherbereich eines Teils der im Terminal hinterlegten Software spezifiziert. Die Speicherbereichs-Identifikation kann dabei beispielsweise in der Form einer Startadresse für die im Terminal hinterlegte Software, insbesondere in der Form einer Speicheradresse eines Flash-Speichers im Terminal, und einer Länge des Speicherbereichs angegeben sein. Nach der Entnahme des dritten Passworts übermittelt der tragbare Datenträger die dem entnommenen dritten Passwort zugeordnete Speicherbereichs-Identifikation an das Terminal, das daraus ein drittes Passwort ableitet. Anschließend wird verifiziert, ob das im Terminal abgeleitete dritte Passwort mit dem der Tabelle entnommenen dritten Passwort übereinstimmt. Dies kann derart erfolgen, dass das im Terminal abgeleitete dritte Passwort an den Datenträger übermittelt wird und dort mit dem entsprechenden dritten Passwort aus der Tabelle verglichen wird. Nur bei Übereinstimmung der beiden dritten Passwörter ist der zweite Verifikationsschritt erfolgreich. Mit dieser Ausführungsform des Verfahrens wird eine besonders hohe Sicherheit gegen Manipulationen bei der Authentisierung des Terminals gegenüber dem tragbaren Datenträger erreicht.

In einer bevorzugten Variante der soeben beschriebenen Ausführungsform leitet das Terminal das dritte Passwort durch Bilden eines Hashwerts mittels einer dritten Hash-Funktion über den Speicherbereich ab, der durch die übermittelte Speicherbereichs-Identifikation spezifiziert ist. Die dritte Hash-Funktion kann wiederum beliebig ausgestaltet sein und gegebenenfalls mit der oben beschriebenen ersten bzw. zweiten Hash-Funktion übereinstimmen. Gemäß dieser Variante ist somit in der Tabelle für jede Speicherbereichs-Identifikation ein erwarteter Hashwert gemäß der auf dem Terminal zu verwendenden Software hinterlegt.

In einer weiteren Ausgestaltung des erfindungsgemäßen Verfahrens kann die Anzahl von erfolglosen Authentisierungen begrenzt werden. Dabei wird vor dem ersten Verifikationsschritt und/oder nach erfolglosem ersten und/oder zweiten Verifikationsschritt überprüft, ob ein Zählwert im tragbaren Datenträger einen vorgegebenen Schwellwert (beispielsweise den Wert 0) erreicht hat, wobei bei Erreichen des Schwellwerts eine nochmalige Inbetriebnahme von Terminal und tragbarem Datenträger blockiert wird. Der Zählwert wird nach jedem erfolglosen ersten und/oder zweiten Verifikationsschritt inkrementiert oder dekrementiert.

Neben dem oben beschriebenen Verfahren zur Zuordnung eines tragbaren Datenträgers zu einem Terminal umfasst die Erfindung ferner ein Verfahren zur Herstellung eines Systems aus Terminal und tragbarem Datenträger, wobei ein Terminal und ein tragbarer Datenträger bereitgestellt werden, welche mit dem erfindungsgemäßen Zuordnungsverfahren einander zugeordnet werden.

Die Erfindung betrifft darüber hinaus ein System aus Terminal und tragbarem Datenträger, wobei das System derart ausgestaltet ist, dass mit dem System das oben beschriebene Zuordnungsverfahren durchführbar ist.

Ausführungsbeispiele der Erfindung werden nachfolgend anhand der beigefügten Figuren detailliert beschrieben.

Es zeigen:
- Fig. 1: ein Ablaufdiagramm, welches eine Ausführungsform des erfindungsgemäßen Verfahrens verdeutlicht;
- Fig. 2: ein Ablaufdiagramm gemäß einer weiteren Ausführungsform des erfindungsgemäßen Verfahrens, wobei ein Terminal und eine Chipkarte, welche gemäß Fig. 1 einander zugeordnet wurden, in Betrieb genommen werden; und
- Fig. 3: ein Ablaufdiagramm, welches eine Abwandlung der Ausführungsform der Fig. 2 verdeutlicht.

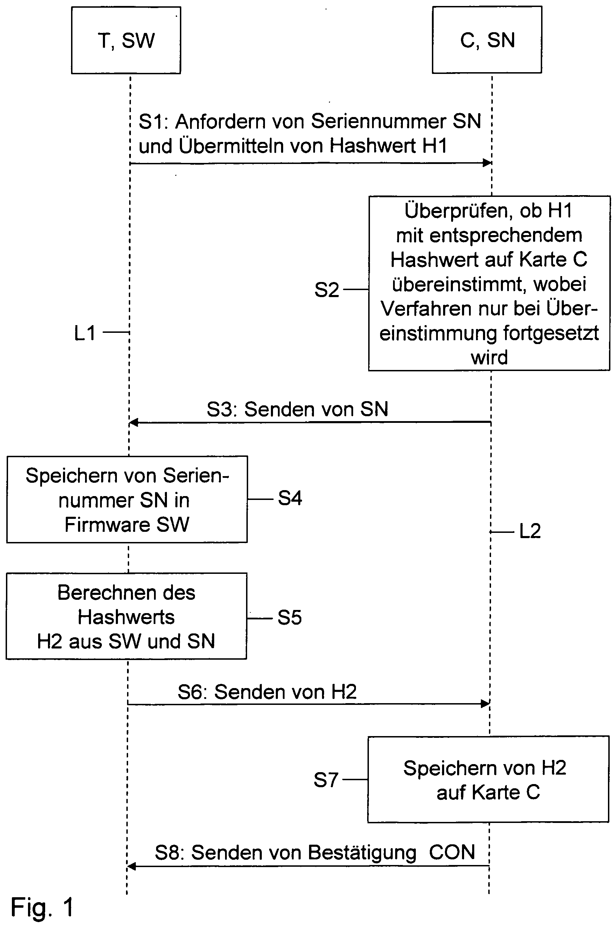

Fig. 1 zeigt eine Ausführungsform des erfindungsgemäßen Verfahrens, bei der im Rahmen der Produktion eines Terminals T ein tragbarer Datenträger C diesem Terminal zugeordnet wird. Bei dem Terminal handelt es sich insbesondere um eine sog. Control-Cash-Unit, welche in Registrierkassen zur verschlüsselten Speicherung von Zahlvorgängen verwendet wird. Im Rahmen der Herstellung des Terminals wird dabei als Sicherheitselement ein tragbarer Datenträger, z.B. eine Chipkarte bzw. Smartcard, insbesondere in der Form einer Secure µSD-Karte, in den Terminal integriert.

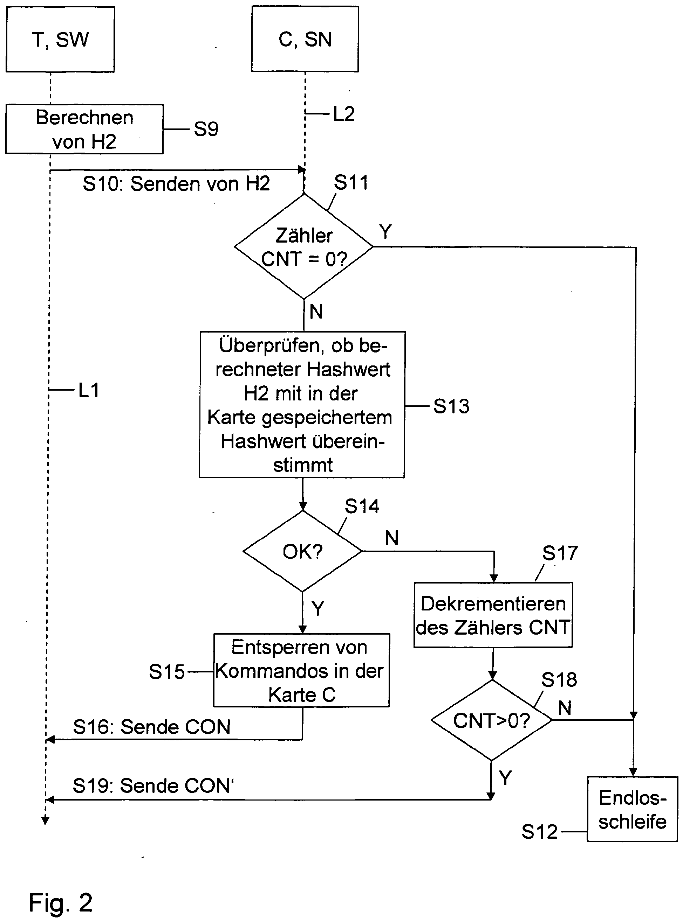

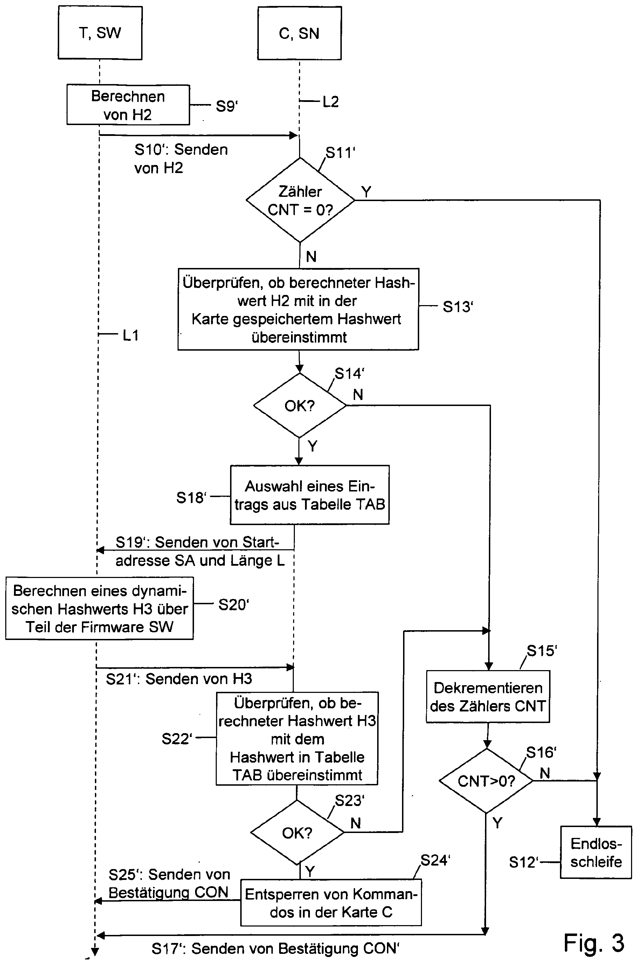

In dem Ablaufdiagramm der Fig. 1 sind die vom Terminal T durchgeführten Schritte entlang der Linie L1 angeordnet und die von der Karte C durchgeführten Schritte entlang der Linie L2. Das Gleiche gilt auch für die nachfolgenden Fig. 2 und Fig. 3, wobei in diesen Figuren auch die rechts der Linie L2 angeordneten Schritte durch die Karte C durchgeführt werden. Die vom Terminal T ausgeführten Schritte werden insbesondere durch den Programm-Flash im Terminal durchgeführt.

In einem Flash-Speicher bzw. Programm-Flash des Terminals T ist als Software die Firmware dieses Terminals hinterlegt, welche in den Figuren mit SW bezeichnet wird. Dem Chip der Karte C ist ferner eine eindeutige Identifikation in der Form einer Seriennummer zugeordnet, welche in den Figuren mit SN bezeichnet wird. Bei der Produktion des Terminals erfolgt ein Binden der Karte C an den Terminal T, wobei im Rahmen dieses Prozesses die Terminal-Firmware mitverifiziert wird. Dabei ist zu berücksichtigen, dass der Hersteller des Endgeräts aus Terminal und zugeordneter Chipkarte die Hardware für das Terminal T von einem Lieferanten bezieht, dem bereits vorab die Terminal-Firmware zum Aufspielen auf den Flash-Speicher bereitgestellt wurde. Bei der Zusammenführung von Terminal und Chipkarte zu dem Endgerät besteht dabei die Gefahr, dass die Firmware manipuliert wurde bzw. nicht der aktuellsten Version entspricht. Zur Behebung dieser Sicherheitslücke erfolgt in dem nachfolgend beschriebenen Verfahren gemäß Fig. 1 eine Verifikation der Firmware SW.

Gemäß Schritt S1 des Verfahrens der Fig. 1 wird auf Veranlassung eines Produktionssystems die Seriennummer SN von der Karte C angefordert. Im Rahmen dieser Anforderung wird ferner ein mit einer Hash-Funktion gebildeter Hashwert H1 (z.B. HMAC SHA1) übermittelt, wobei der Hashwert im Terminal T über die Terminal-Firmware SW gebildet wird und einer Ausführungsform eines ersten Passworts im Sinne der Ansprüche entspricht. Im Schritt S2 erfolgt dann auf Seiten der Karte C die Überprüfung, ob eine Manipulation der Firmware SW vorliegt. Hierzu ist auf der Chipkarte C vorab ein entsprechender Hashwert gespeichert, der analog zu dem Hashwert H1 mit der gleichen Hash-Funktion über die im Terminal zu verwendende Firmware gebildet wurde. In Schritt S2 wird demzufolge überprüft, ob der in Schritt S1 übermittelte Hashwert H1 mit dem entsprechenden Hashwert der Karte C übereinstimmt. Nur im Falle einer Übereinstimmung wird das Verfahren fortgesetzt. Ansonsten wird das Verfahren bereits an dieser Stelle abgebrochen und eine entsprechende Fehlermeldung im Produktionsprozess ausgegeben. Auf diese Weise wird verhindert, dass manipulierte Firmware bzw. Firmware, welche nicht auf dem aktuellen Stand ist, auf dem Terminal verwendet wird.

Um im Falle von übereinstimmenden Hashwerten eine eindeutige Zuordnung zwischen Terminal T und Chipkarte C zu erreichen, wird in den nachfolgenden Schritten ein individueller, nur zwischen Terminal T und Chipkarte C gültiger Hashwert als zweites Passwort ausgehandelt. Hierzu sendet die Chipkarte C in Schritt S3 zunächst eine eindeutige Identifikation in der Form ihrer Seriennummer SN an den Terminal T. In dem Terminal wird diese Seriennummer SN dann gemäß Schritt S4 in einen Bereich der Firmware SW eingetragen, der nicht am Ende der Firmware liegt. Anschließend wird in Schritt S5 ein Hashwert H2 aus der kompletten Firmware SW, welche nunmehr auch die Seriennummer SN enthält, berechnet. Schließlich wird der Hashwert H2 in Schritt S6 an die Karte C übermittelt und dort in Schritt S7 gespeichert. Bei erfolgreicher Speicherung wird anschließend in Schritt S8 eine Bestätigung bzw. Quittung CON, z.B. 9000, von der Karte C an das Terminal T zurückgesendet. Ferner sendet die Firmware SW die Seriennummer SN an das Produktionssystem.

Im Rahmen des anhand von Fig. 1 beschriebenen Verfahrens wird somit ein Terminal mit zugeordneter Chipkarte (z.B. eine Cash-Control-Unit) produziert, wobei im Rahmen des Produktionsprozesses auch die Firmware des Terminals verifiziert wurde. Der derart produzierte Terminal, in dem bei Auslieferung die zugeordnete Karte verbaut ist, wird anschließend mit Hilfe des die Zuordnung zwischen Terminal und Chipkarte beschreibenden Hashwerts H2 in Betrieb genommen, wie nachfolgend anhand von Fig. 2 und Fig. 3 beschrieben wird. Die Inbetriebnahme erfolgt dabei dann, wenn der Terminal mit der zugeordneten Chipkarte mit Spannung versorgt wird.

Bei der Inbetriebnahme des Terminals basierend auf der Ausführungsform der Fig. 2 wird über den Programm-Flash des Terminals zunächst der Hashwert H2 rekonstruiert, indem dieser Hashwert mit der gleichen Hash-Funktion wie in Schritt S5 der Fig. 1 über die Firmware SW zusammen mit der Seriennummer SN der Karte berechnet wird (Schritt S9). Dieser berechnete Hashwert wird in Schritt S10 dann an die Karte C gesendet. Um eine erfolglose Verifikation der Zuordnung zwischen Terminal T und Karte C nur eine vorbestimmte Anzahl von Malen zu erlauben und hierdurch die Sicherheit des Verfahrens zu verbessern, ist in der Chipkarte C ein Zähler CNT hinterlegt, der nach jeder erfolglosen Verifikation dekrementiert wird. Sobald der Zähler, der mit einem Anfangswert initialisiert ist, den Wert 0 erreicht, läuft das Verfahren in eine Endlosschleife, wie weiter unten noch näher beschrieben wird. Dies hat zur Folge, dass eine nochmalige Inbetriebnahme von Terminal und Chipkarte nicht mehr möglich ist.

Nach dem Senden des Hashwerts H2 in Schritt S10 wird in Schritt S11 der oben beschriebene Zähler CNT dahingehend überprüft, ob er bereits den Wert 0 erreicht hat. Ist dies der Fall, läuft das Verfahren gemäß Schritt S12 in die bereits oben beschriebe Endlosschleife (Zweig Y). Ist der Zähler CNT > 0 (Zweig N), wird in Schritt S13 überprüft, ob der berechnete und an die Karte C übermittelte Hashwert H2 mit dem in der Karte gespeicherten Hashwert übereinstimmt. Der gespeicherte Hashwert wurde dabei im oben beschriebenen Schritt S7 gemäß Fig. 1 auf der Karte hinterlegt. Wird gemäß Schritt S14 keine Übereinstimmung festgestellt (Zweig N), wird der Zähler CNT dekrementiert (Schritt S17). Anschließend erfolgt in Schritt S18 die Überprüfung, ob der Zähler nach dem Dekrementieren immer noch größer Null ist. Ist dies nicht der Fall (Zweig N), läuft das Verfahren wiederum in die Endlosschleife S12. Ist der Zähler noch größer Null, wird eine Bestätigung CON', beispielsweise 9F 00, in Schritt S19 an das Terminal geschickt. Diese Bestätigung teilt mit, dass die Authentisierung zwischen Terminal T und Karte C und damit die Inbetriebnahme des Geräts nicht erfolgreich war. Wird demgegenüber in Schritt S14 festgestellt, dass der Hashwert H2 mit dem in der Karte gespeicherten Hashwert übereinstimmt (Zweig Y), erfolgt in Schritt S15 ein Entsperren der Systemkommandos in der Karte C, welche für den Terminal T benötigt werden. Nach erfolgreichem Entsperren wird schließlich ein Bestätigungskommando CON, bzw. 9000, an die Firmware SW des Terminals T zurückgegeben, wobei dieses Kommando die erfolgreiche Authentisierung von Terminal T und Karte C quittiert.

Fig. 3 zeigt eine Abwandlung der Ausführungsform der Fig. 2, wobei nunmehr neben der Überprüfung des Hashwerts H2 auch ein weiterer dynamischer Hashwert H3 verifiziert wird. Das Verfahren der Fig. 3 läuft zunächst analog zum Verfahren der Fig. 2 ab. Das heißt, zunächst wird in einem Schritt S9' im Terminal T der Hashwert H2 aus Firmware SW und Seriennummer SN berechnet. Dieser Hashwert wird in Schritt S10' an die Karte C übermittelt, welche in Schritt S11' wiederum überprüft, ob ein entsprechender Zähler CNT bereits den Wert 0 erreicht hat. Ist dies der Fall, läuft das Verfahren gemäß Schritt S12' in Analogie zum Verfahren der Fig. 2 in eine Endlosschleife. Ist der Zähler CNT noch größer Null, erfolgt in Schritt S13' zunächst genauso wie im Verfahren der Fig. 2 die Überprüfung, ob der berechnete und an die Karte übermittelte Hashwert H2 mit dem in der Karte gespeicherten Hashwert übereinstimmt. Ergibt das Überprüfungsergebnis gemäß Schritt S14', dass keine Übereinstimmung vorliegt (Zweig N), wird der Zähler CNT in Schritt S19' dekrementiert und anschließend in Schritt S16' überprüft, ob der Zähler CNT immer noch größer Null ist. Ist dies nicht der Fall (Zweig N), läuft das Verfahren in die Endlosschleife gemäß Schritt S12'. Ansonsten wird die Bestätigung CON', beispielsweise 9F 00, in Schritt S17' an den Terminal T ausgegeben, wobei diese Bestätigung quittiert, dass die Authentisierung zwischen Terminal T und Chipkarte C nicht erfolgreich war.

Das Verfahren der Fig. 3 unterscheidet sich vom Verfahren der Fig. 2 nunmehr darin, dass im Falle, dass in Schritt S14' eine Übereinstimmung zwischen den Hashwerten H2 im Terminal T und in der Karte C festgestellt wird, nicht sofort die Kommandos in der Karte entsperrt werden, sondern eine weitere Überprüfung basierend auf einem dynamischen Hashwert durchgeführt wird, der eine Ausführungsform eines dritten Passworts im Sinne der Ansprüche darstellt. Zur Realisierung dieses dynamischen Hashwerts ist in der Karte C eine Tabelle TAB hinterlegt, welche mehrere Speicherbereichs-Identifikationen in der Form einer Startadresse des Programm-Flashs des Terminals T und einer Speicherlänge enthält, welche für verschiedene Einträge in der Tabelle unterschiedlich ist. Dabei ist für jede Speicherbereichs-Identifikation ein zu erwartender Hashwert hinterlegt, der vorab mit einer Hash-Funktion für die entsprechend zu verwendende Terminal-Firmware über den Teil der Firmware gemäß der jeweiligen Speicherbereichs-Identifikation ermittelt wurde.

In Schritt S18' wird nunmehr ein Eintrag aus der Tabelle TAB ausgewählt, wobei die Auswahl bei jeder Inbetriebnahme zufällig erfolgen kann bzw. sichergestellt wird, dass bei jeder Neuinbetriebnahme ein anderer Wert aus der Tabelle ausgewählt wird. Die Tabelle kann dabei eine größere Anzahl von Einträgen enthalten, wobei die Anzahl der Einträge nur durch den freien EEPROM-Bereich der Karte begrenzt ist. Die Tabelle wird dabei in der Entwicklung aus dem Linker-Outputfile bzw. aus einem HEX-File generiert und bei der Personalisierung in die Karte mit eingebracht. Nach Auswahl eines Eintrags wird dann in Schritt S19' die Speicherbereichs-Identifikation dieses Eintrags in der Form der Startadresse SA und der Speicherlänge L an das Programm-Flash des Terminals T übermittelt. Dort wird dann in Schritt S20' über den Teil der Firmware gemäß der Startadresse SA und der Speicherbereichslänge L der Hashwert H3 ermittelt. Dieser Hashwert H3 wird dann vom Terminal T in Schritt S21' an die Karte C gesendet.

Schließlich wird in Schritt S22' von der Karte C überprüft, ob der berechnete Hashwert H3 mit dem entsprechenden Hashwert gemäß dem ausgewählten Eintrag aus der Tabelle TAB übereinstimmt. Ergibt die Überprüfung, dass keine Übereinstimmung vorliegt (Zweig N aus Schritt S23'), wurde eine Manipulation eines Teilbereichs des Flashs vorgenommen. Demzufolge wird der Zähler CNT gemäß Schritt S15' dekrementiert, wobei anschließend in Schritt S16' überprüft wird, ob der Zähler CNT bereits den Wert 0 erreicht hat. Ist dies der Fall (Zweig N), läuft das Verfahren wieder in die Endlosschleife gemäß Schritt S12'. Ist dies nicht der Fall (Zweig Y), wird wiederum eine Bestätigung CON' in Schritt S17' an den Terminal T ausgegeben, welche anzeigt, dass die Authentisierung zwischen Terminal T und Chipkarte C nicht erfolgreich war. Wird demgegenüber in Schritt S23' festgestellt, dass der Hashwert H3 mit dem entsprechenden Hashwert aus der Tabelle übereinstimmt (Zweig Y), werden die Kommandos auf der Karte C in Schritt S24' entsperrt und eine Bestätigung CON in Schritt S25' an den Terminal T gesendet, wobei mit dieser Bestätigung quittiert wird, dass die Authentisierung zwischen Terminal T und Chipkarte C erfolgreich war. Sowohl im Verfahren der Fig. 2 als auch im Verfahren der Fig. 3 kann nach Empfang der positiven Bestätigung CON der bestimmungsgemäße Betrieb des Geräts aus Terminal und Chipkarte aufgenommen werden.

Die Variante der Fig. 3 erhöht nochmals die Sicherheit des Verfahrens gegenüber Manipulationen der Firmware, da dynamisch bei jeder Inbetriebnahme für unterschiedliche Speicherbereiche des Flash-Speichers des Terminals nochmals eine Überprüfung im Hinblick auf Codemanipulationen vorgenommen wird. Es wird somit Schutz gegen Angriffe erreicht, bei denen eine manipulierte Software einmalig zu Beginn der Inbetriebnahme den Hashwert H2 abhört und der Karte vorspielt.

Die im Vorangegangenen beschriebenen Ausführungsformen des erfindungsgemäßen Verfahrens weisen eine Reihe von Vorteilen auf. Insbesondere wird während der Produktion eines Terminals mit zugeordneter Karte sichergestellt, dass die auf dem Terminal verwendete Software die richtige Version aufweist bzw. nicht manipuliert wurde. Diese Überprüfung erfolgt basierend auf einem initialen ersten Passwort, wobei erst nach erfolgreicher Überprüfung eine individuelle Zuordnung zwischen dem Terminal und der Karte über ein zweites Passwort erfolgt. Im anschließenden Betrieb des Terminals mit zugeordneter Chipkarte wird dann das zweite Passwort zur Authentisierung zwischen Terminal und Chipkarte verwendet, wobei gegebenenfalls auch ein weiteres dynamisches drittes Passwort im Rahmen der Authentisierung eingesetzt werden kann.

## Patentansprüche

1. Verfahren, basierend auf einer Kommunikation zwischen einem tragbaren Datenträger (C) und einem Terminal (T), bei dem
a) ein dem Terminal (T) zugeordnetes erstes Passwort (H1), das aus einer im Terminal (T) hinterlegten Software (SW) abgeleitet ist, von dem Terminal (T) an den tragbaren Datenträger (C) übermittelt wird, und
b) der tragbare Datenträger anschließend verifiziert, ob das übermittelte erste Passwort (H1) mit dem entsprechenden, dem tragbaren Datenträger (C) zugeordneten und auf diesem gespeicherten ersten Passwort (H1) übereinstimmt,
c) im Falle einer erfolgreichen Verifikation zum Binden des tragbaren Datenträgers (C) an das Terminal (T) ein zweites, individuell für das Terminal (T) und den tragbaren Datenträger (C) gültiges Passwort (H2), welches bei einer Inbetriebnahme des Terminals (T) mit dem tragbaren Datenträger (C) durch Prüfung auf Übereinstimmung verifizierbar ist, dem Terminal (T) und dem tragbaren Datenträger (C) zugeordnet (S3-S8) wird, wobei
d) der tragbare Datenträger (C) eine ihm zugeordnete Identifikation (SN) an das Terminal (T) übermittelt (S3),
e) das Terminal (T) aus der Identifikation (SN) des tragbaren Datenträgers (C) und der im Terminal hinterlegten Software (SW) das zweite, individuell für das Terminal (T) und den tragbaren Datenträger (C) gültige Passwort (H2) ableitet (S5) und an den tragbaren Datenträger (C) übermittelt (S6), und
f) der tragbare Datenträger das zweite Passwort (H2) speichert (S7).

2. Verfahren nach Anspruch 1, **dadurch gekennzeichnet, dass** das erste Passwort (H1) durch Bilden eines Hashwerts mit einer ersten Hash-Funktion über die im Terminal (T) hinterlegte Software (SW) abgeleitet ist.

3. Verfahren nach Anspruch 2, **dadurch gekennzeichnet, dass** das zweite Passwort (H2) durch Bilden eines Hashwerts mit einer zweiten Hash-Funktion über die im Terminal (T) hinterlegte Software (SW) und die Identifikation (SN) des tragbaren Datenträgers (C) gebildet wird.

4. Verfahren nach einem der vorhergehenden Ansprüche, **dadurch gekennzeichnet, dass** die Schritte a), b) und c) in einer gesicherten Umgebung, insbesondere im Rahmen der Produktion des Terminals (T) mit darin integriertem tragbaren Datenträger (C), durchgeführt werden.

5. Verfahren nach einem der vorhergehenden Ansprüche, **dadurch gekennzeichnet, dass** nach Durchführung des Schritts c) das Terminal (T) und der tragbare Datenträger (C) in Betrieb genommen werden, wobei im Rahmen der Inbetriebnahme in einem ersten Verifikationsschritt verifiziert wird, ob das dem Terminal (T) zugeordnete zweite Passwort (H2) mit dem dem tragbaren Datenträger (C) zugeordneten zweiten Passwort (H2) übereinstimmt, wobei die Inbetriebnahme ausschließlich bei erfolgreichem ersten Verifikationsschritt fortgesetzt wird.

6. Verfahren nach Anspruch 5, **dadurch gekennzeichnet, dass** nach erfolgreichem ersten Verifikationsschritt in einem zweiten Verifikationsschritt verifiziert wird, ob ein drittes, bei jeder Inbetriebnahme von Terminal (T) und tragbarem Datenträger (C) veränderbares Passwort (H3), das in dem tragbaren Datenträger (C) hinterlegt ist, mit einem entsprechenden, dem Terminal (T) zugeordneten dritten Passwort (H3) übereinstimmt, wobei die Inbetriebnahme ausschließlich bei erfolgreichem zweiten Verifikationsschritt fortgesetzt wird.

7. Verfahren nach Anspruch 6, **dadurch gekennzeichnet, dass** der zweite Verifikationsschritt derart abläuft, dass
- das dritte Passwort (H3) aus einer in dem tragbaren Datenträger (C) hinterlegten Tabelle (TAB), umfassend mehrere dritte Passwörter, entnommen wird, wobei in der Tabelle jedem dritten Passwort (H3) eine Speicherbereichs- Identifikation (SA, L) zugeordnet ist, welche einen Speicherbereich eines Teils der im Terminal (T) hinterlegten Software (SW) spezifiziert;
- der tragbare Datenträger (C) die dem entnommenen dritten Passwort (H3) zugeordnete Speicherbereichs-Identifikation (SA, L) an das Terminal (T) übermittelt, das daraus ein drittes Passwort (H3) ableitet;
- verifiziert wird, ob das im Terminal (T) abgeleitete dritte Passwort (H3) mit dem der Tabelle (TAB) entnommenen dritten Passwort (H3) übereinstimmt.

8. Verfahren nach Anspruch 7, **dadurch gekennzeichnet, dass** das Terminal (T) das dritte Passwort (H3) durch Bilden eines Hashwerts mittels einer dritten Hash-Funktion über den Speicherbereich gemäß der an das Terminal übermittelten Speicherbereichs-Identifikation (SA, L) ableitet.

9. Verfahren nach einem der Ansprüche 5 bis 8, **dadurch gekennzeichnet, dass** vor dem ersten Verifikationsschritt und/oder nach erfolglosem ersten und/oder zweiten Verifikationsschritt überprüft wird, ob ein Zählwert (CNT) im tragbaren Datenträger (C) einen vorgegebenen Schwellwert erreicht hat, wobei bei Erreichen des Schwellwerts eine nochmalige Inbetriebnahme von Terminal (T) und tragbarem Datenträger (C) blockiert wird, wobei der Zählwert (CNT) nach jedem erfolglosen ersten und/oder zweiten Verifikationsschritt inkrementiert oder dekrementiert wird.

10. System aus Terminal (T) und tragbarem Datenträger (C), wobei das System derart ausgestaltet ist, dass es ein Verfahren durchführt ist, bei dem
a) ein dem Terminal (T) zugeordnetes erstes Passwort (H1), das aus einer im Terminal (T) hinterlegten Software (SW) abgeleitet ist, von dem Terminal an den tragbaren Datenträger (C) übermittelt wird, und
b) der tragbare Datenträger anschließend verifiziert, ob das übermittelte erste Passwort (H1) mit dem entsprechenden, dem tragbaren Datenträger (C) zugeordneten und auf diesem gespeicherten ersten Passwort (H1) übereinstimmt,
c) im Falle einer erfolgreichen Verifikation zum Binden des tragbaren Datenträgers (C) an das Terminal (T) ein zweites, individuell für das Terminal (T) und den tragbaren Datenträger (C) gültiges Passwort (H2), welches bei einer Inbetriebnahme des Terminals (T) mit dem tragbaren Datenträger (C) durch Prüfung auf Übereinstimmung verifizierbar ist, dem Terminal (T) und dem tragbaren Datenträger (C) zugeordnet (S3-S8) wird, wobei
d) der tragbare Datenträger (C) eine ihm zugeordnete Identifikation (SN) an das Terminal (T) übermittelt (S3),
e) das Terminal (T) aus der Identifikation (SN) des tragbaren Datenträgers (C) und der im Terminal hinterlegten Software (SW) das zweite, individuell für das Terminal (T) und den tragbaren Datenträger (C) gültige Passwort (H2) ableitet (S5) und an den tragbaren Datenträger (C) übermittelt (S6), und
f) der tragbare Datenträger das zweite Passwort (H2) speichert (S7).

11. System nach Anspruch 10, **dadurch gekennzeichnet, dass** es ein Verfahren nach einem der Ansprüche 2 bis 9 durchzuführt.

## Claims

1. A method based on a communication between a portable data carrier (C) and terminal (T), in which
a) a first password (H1) that is derived from a software (SW) deposited in the terminal (T) and is allocated to the terminal (T) is transmitted from the terminal (T) to the portable data carrier (C), and
b) the portable data carrier verifies subsequently whether the transmitted first password (H1) matches the corresponding first password (H1) allocated to the portable data carrier (C) and stored thereon,
c) in the case of successful verification, for binding the portable data carrier (C) to the terminal (T), a second password (H2) is allocated (S3-S8) to the terminal (T) and the portable data carrier (C), said second password being valid individually for the terminal (T) and the portable data carrier (C) and being verifiable upon putting the terminal (T) into operation with the portable data carrier (C) by checking for a match, wherein
d) the portable data carrier (C) transmits (S3) an identification (SN) allocated thereto to the terminal (T),
e) the terminal (T) derives (S5) the second password (H2) that is valid individually for the terminal (T) and the portable data carrier (C) from the identification (SN) of the portable data carrier (C) and the software (SW) deposited in the terminal and transmits (S6) said second password to the portable data carrier (C), and
f) the portable data carrier stores (S7) the second password (H2).

2. The method according to claim 1, **characterized in that** the first password (H1) is derived by forming a hash value with a first hash function over the software (SW) deposited in the terminal (T).

3. The method according to claim 2, **characterized in that** the second password (H2) is derived by forming a hash value with a second hash function over the software (SW) deposited in the terminal (T) and the identification (SN) of the portable data carrier (C).

4. The method according to any of the preceding claims, **characterized in that** the steps a) and b) are carried out in a secure environment, in particular within the scope of the production of the terminal (T) with the portable data carrier (C) integrated therein.

5. The method according to any of the preceding claims, **characterized in that** after carrying out the step c) the terminal (T) and the portable data carrier (C) are put into operation, wherein within the scope of putting into operation it is verified in a first verification step whether the second password (H2) allocated to the terminal (T) matches the second password (H2) allocated to the portable data carrier (C), wherein the putting into operation is continued exclusively if the first verification step has been successful.

6. The method according to claim 5, **characterized in that** after a successful first verification step it is verified in a second verification step whether a third password (H3) that is alterable upon each putting into operation of the terminal (T) and the portable data carrier (C) and that is deposited in the portable data carrier (C) matches a corresponding third password (H3) allocated to the terminal (T), wherein the putting into operation is continued exclusively if the second verification step has been successful.

7. The method according to claim 6, **characterized in that** the second verification step takes place in such a manner that
- the third password (H3) is extracted from a table (TAB) deposited in the portable data carrier (C), the table comprising several third passwords, wherein in the table a memory area identification (SA, L) is allocated to each third password (H3), said identification specifying a memory area of a part of the software (SW) deposited in the terminal (T);
- the portable data carrier (C) transmits the memory area identification (SA, L) allocated to the extracted third password (H3) to the terminal (T) that derives a third password (H3) therefrom;
- it is verified whether the third password (H3) derived in the terminal (T) matches the third password (H3) extracted from the table (TAB).

8. The method according to claim 7, **characterized in that** the terminal (T) derives the third password (H3) by forming a hash value by means of a third hash function over the memory area according to the memory area identification (SA, L) transmitted to the terminal.

9. The method according to any of claims 5 to 8, **characterized in that** prior to the first verification step and/or after an unsuccessful first and/or second verification step it is checked whether a count value (CNT) in the portable data carrier (C) has reached a predetermined threshold value, wherein when the threshold value is reached a renewed putting into operation of the terminal (T) and the portable data carrier (C) is blocked, wherein the count value (CNT) is incremented or decremented after each unsuccessful first and/or second verification step.

10. A system of a terminal (T) and a portable data carrier (C), wherein the system is configured such that it carries out a method in which
a) a first password (H1) that is derived from a software (SW) deposited in the terminal (T) and is allocated to the terminal (T) is transmitted from the terminal (T) to the portable data carrier (C), and
b) the portable data carrier verifies subsequently whether the transmitted first password (H1) matches the corresponding first password (H1) allocated to the portable data carrier (C) and stored thereon,
c) in the case of successful verification, for binding the portable data carrier (C) to the terminal (T), a second password (H2) is allocated (S3-S8) to the terminal (T) and the portable data carrier (C), said second password being valid individually for the terminal (T) and the portable data carrier (C) and being verifiable upon putting the terminal (T) into operation with the portable data carrier (C) by checking for a match, wherein
d) the portable data carrier (C) transmits (S3) an identification (SN) allocated thereto to the terminal (T),
e) the terminal (T) derives (S5) the second password (H2) that is valid individually for the terminal (T) and the portable data carrier (C) from the identification (SN) of the portable data carrier (C) and the software (SW) deposited in the terminal and transmits (S6) said second password to the portable data carrier (C), and
f) the portable data carrier stores (S7) the second password (H2).

11. The system according to claim 10, **characterized in that** the system carries out a method according to any of claims 2 to 9.

## Revendications

1. Procédé basé sur une communication entre un support de données (C) portable et un terminal (T), dans lequel
a) un premier mot de passe (H1) associé au terminal (T) et dérivé d'un logiciel (SW) enregistré dans le terminal (T) est transmis par le terminal (T) au support de données (C) portable, et
b) le support de données portable vérifie ensuite si le premier mot de passe (H1) transmis concorde avec le premier mot de passe (H1) correspondant associé au support de données (C) portable et mémorisé sur ce dernier,
c) dans le cas d'une vérification fructueuse, pour lier le support de données (C) portable au terminal (T), un deuxième mot de passe (H2), valable individuellement pour le terminal (T) et pour le support de données (C) portable et vérifiable, lors de la mise en service du terminal (T) avec le support de données (C) portable, par contrôle de concordance, est associé (S3, S8) au terminal (T) et au support de données (C) portable, cependant que
d) le support de données (C) portable transmet (S3) une identification (SN) qui lui est associée au terminal (T),
e) le terminal (T) dérive (S5), à partir de l'identification (SN) du support de données (C) portable et du logiciel (SW) enregistré dans le terminal, le deuxième mot de passe (H2) valable individuellement pour le terminal (T) et pour le support de données (C) portable, et le transmet (S6) au support de données (C) portable, et
f) le support de données portable mémorise (S7) le deuxième mot de passe (H2).

2. Procédé selon la revendication 1, **caractérisé en ce que** le premier mot de passe (H1) est dérivé par constitution d'une valeur de hachage avec une première fonction de hachage par le biais du logiciel (SW) enregistré dans le terminal (T).

3. Procédé selon la revendication 2, **caractérisé en ce que** le deuxième mot de passe (H2) est dérivé par constitution d'une valeur de hachage avec une deuxième fonction de hachage par le biais du logiciel (SW) enregistré dans le terminal (T) et de l'identification (SN) du support de données (C) portable.

4. Procédé selon une des revendications précédentes, **caractérisé en ce que** les étapes a), b) et c) sont exécutées dans un environnement sécurisé, en particulier dans le cadre de la production du terminal (T) ayant un support de données (C) portable y étant intégré.

5. Procédé selon une des revendications précédentes, **caractérisé en ce que**, après exécution de l'étape c), le terminal (T) et le support de données (C) portable sont mis en service, cependant que, dans le cadre de la mise en service, lors d'une première étape de vérification, il est vérifié si le deuxième mot de passe (H2) associé au terminal (T) concorde avec le deuxième mot de passe (H2) associé au support de données (C) portable, cependant que la mise en service n'est poursuivie exclusivement que dans le cas où la première étape de vérification est fructueuse.

6. Procédé selon la revendication 5, **caractérisé en ce que**, après la première étape de vérification fructueuse, il est vérifié lors d'une deuxième étape de vérification si un troisième mot de passe (H3), modifiable à chaque mise en service du terminal (T) et du support de données (C) portable, enregistré dans le support de données (C) portable, concorde avec un troisième mot de passe (H3) correspondant associé au terminal (T), cependant que la mise en service n'est poursuivie exclusivement que dans le cas où la deuxième étape de vérification est fructueuse.

7. Procédé selon la revendication 6, **caractérisé en ce que** la deuxième étape de vérification se déroule de telle façon que
- le troisième mot de passe (H3) est puisé dans une table (TAB) enregistrée dans le support de données (C) portable et comprenant plusieurs troisièmes mots de passe, cependant que, dans la table, une identification de zone mémoire (SA, L) est associée à un troisième mot de passe (H3) sur trois, ladite identification spécifiant une zone mémoire d'une partie du logiciel (SW) enregistré dans le terminal (T) ;
- le support de données (C) portable transmet l'identification de zone mémoire (SA, L) associée au troisième mot de passe (H3) puisé au terminal (T), lequel dérive à partir d'elle un troisième mot de passe (H3)
- il est vérifié si le troisième mot de passe (H3) dérivé dans le terminal (T) concorde avec le troisième mot de passe (H3) puisé dans la table (TAB).

8. Procédé selon la revendication 7, **caractérisé en ce que** le terminal (T) dérive le troisième mot de passe (H3) par constitution d'une valeur de hachage au moyen d'une troisième fonction de hachage par le biais de la zone mémoire suivant l'identification de zone mémoire (SA, L) transmise au terminal.

9. Procédé selon une des revendications de 5 à 8, **caractérisé en ce que**, avant la première étape de vérification et/ou après fructueuse première et/ou deuxième étape de vérification, il est vérifié si une valeur de comptage (CNT) dans le support de données (C) portable a atteint une valeur seuil prédéterminée, cependant que, lorsque la valeur seuil est atteinte, une nouvelle remise en service du terminal (T) et du support de données (C) portable est bloquée, cependant que la valeur de comptage (CNT) est, après chaque infructueuse première et/ou deuxième étape de vérification, incrémentée ou décrémentée.

10. Système consistant en un terminal (T) et un support de données (C) portable, le système étant conçu de telle façon qu'il exécute un procédé dans lequel :
a) un premier mot de passe (H1) associé au terminal (T) et dérivé d'un logiciel (SW) enregistré dans le terminal (T) est transmis par le terminal au support de données (C) portable, et
b) le support de données portable vérifie ensuite si le premier mot de passe (H1) transmis concorde avec le premier mot de passe (H1) correspondant associé au support de données (C) portable et mémorisé sur ce dernier,
c) dans le cas d'une vérification fructueuse, pour lier le support de données (C) portable au terminal (T), un deuxième mot de passe (H2) valable individuellement pour le terminal (T) et pour le support de données (C) portable et vérifiable, lors de la mise en service du terminal (T), avec le support de données (C) portable, par contrôle de concordance, est associé (S3, S8) au terminal (T) et au support de données (C) portable, cependant que
d) le support de données (C) portable transmet (S3) une identification (SN) qui lui est associée au terminal (T),
e) le terminal (T) dérive (S5), à partir de l'identification (SN) du support de données (C) portable et du logiciel (SW) enregistré dans le terminal, le deuxième mot de passe (H2) valable individuellement pour le terminal (T) et pour le support de données (C) portable, et le transmet (S6) au support de données (C) portable, et
f) le support de données portable mémorise (S7) le deuxième mot de passe (H2).

11. Système selon la revendication 10, **caractérisé en ce qu'**il exécute un procédé selon une des revendications de 2 à 9.
